# EUROPEAN PATENT SPECIFICATION

(11) **EP 4 388 774 B1**
(45) Date of publication and mention of the grant of the patent: **12.08.2026**
(21) Application number: 22919420.4
(22) Date of filing: 13.01.2022
(51) Int. Cl.: H04W 76/19, H04W 76/27, H04W 48/20, H04W 80/02

(54) **DL SDT ENHANCEMENT**
DL-SDT-VERBESSERUNG
AMÉLIORATION DE TRANSMISSION DE PETITES DONNÉES EN LIAISON DESCENDANTE

(43) Date of publication of application: 26.06.2024
(73) Proprietor: Lenovo (Beijing) Limited, Beijing 100085 (CN)
(72) Inventor: YUE, Ran, Beijing 100191 (CN); DAI, Mingzeng, Shanghai 201315 (CN); WU, Lianhai, Beijing 100028 (CN); HAN, Jing, Beijing 100022 (CN); WANG, Haiming, Beijing 100011 (CN)
(74) Representative: Openshaw & Co.
(86) International application number: PCT/CN2022/071810
(87) International publication number: WO 2023/133757

(56) References cited:
- WO-A1-2020/189958
- WO-A1-2021/161621
- WO-A1-2021/257856
- CN-A- 110 831 258
- US-A1- 2017 318 532
- LENOVO ET AL: "SDT Related Procedures", vol. RAN WG3, no. E-meeting; 20211101 - 20211111, 22 October 2021 (2021-10-22), XP052068301, Retrieved from the Internet <URL:https://ftp.3gpp.org/tsg_ran/WG3_Iu/TSGR3_114-e/Docs/R3-215319.zip R3-215319 SDT Related Procedures.docx> [retrieved on 20211022]
- HUAWEI: "(TPs to RA-SDT BL CRs of TS 38.300, 38.420) RACH based SDT without anchor relocation", vol. RAN WG3, no. E-meeting; 20220117 - 20220126, 7 January 2022 (2022-01-07), XP052098947, Retrieved from the Internet <URL:https://ftp.3gpp.org/tsg_ran/WG3_Iu/TSGR3_114bis-e/Docs/R3-220424.zip R3-220424 (TPs to RA-SDT BL CRs of TS 38.300, 38.420) RACH based SDT without anchor relocation.docx> [retrieved on 20220107]
- ZTE: "Discussion on RACH based SDT", 3GPP DRAFT; R3-214845, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Online; 20211101 - 20211111, 21 October 2021 (2021-10-21), Mobile Competence Centre ; 650, route des Lucioles ; F-06921 Sophia-Antipolis Cedex ; France, XP052067843

## Description

### FIELD

The subject matter disclosed herein generally relates to wireless communications, and more particularly relates to methods and apparatuses for DL small data transmission (SDT) enhancement.

### BACKGROUND

The following abbreviations are herewith defined, at least some of which are referred to within the following description: New Radio (NR), Very Large Scale Integration (VLSI), Random Access Memory (RAM), Read-Only Memory (ROM), Erasable Programmable Read-Only Memory (EPROM or Flash Memory), Compact Disc Read-Only Memory (CD-ROM), Local Area Network (LAN), Wide Area Network (WAN), User Equipment (UE), Evolved Node B (eNB), Next Generation Node B (gNB), Uplink (UL), Downlink (DL), Central Processing Unit (CPU), Graphics Processing Unit (GPU), Field Programmable Gate Array (FPGA), Orthogonal Frequency Division Multiplexing (OFDM), Radio Resource Control (RRC), User Entity/Equipment (Mobile Terminal), Transmitter (TX), Receiver (RX), small data transmission (SDT), configured grant (CG), CG based SDT (CG-SDT), random access channel (RACH), RACH based SDT (RA-SDT), Reference Signal Received Power (RSRP), Mobile originate (MO), Mobile terminated (MT), radio access network (RAN), 5G core (5GC), physical random access channel (PRACH), Data Resource Bearer (DRB), Signal Resource bearer (SRB), RAN-based Notification Area (RNA), Reference Signal Received Power (RSRP), Information Element (IE), media access control (MAC), Radio Link Control (RLC), Access Network (AN), core network (CN), radio link failure (RLF), NR unlicensed spectrum (NR-U), Packet Data Convergence Protocol (PDCP), physical (PHY), serial number (SN), protocol Data Unit (PDU), service Data Unit (SDU), RAN Notification Area Update (RNAU), Artificial Intelligence (AI).

There are two RRC states for 4G LTE: RRC_IDLE and RRC_CONNECTED. 5G NR introduces a new RRC state, RRC_INACTIVE. Therefore, in 5G NR, RRC has three distinct states: RRC_IDLE, RRC_CONNECTED and RRC_INACTIVE.

RRC_IDLE: Upon power on, UE enters into RRC_IDLE state. UE may move to this state from either RRC_CONNECTED state or RRC_INACTIVE state.

RRC_INACTIVE: UE moves to this state from RRC_CONNECTED state. It is connected but inactive state of UE. In this state, UE maintains RRC connection and at the same time minimizes signaling and power consumption.

RRC_CONNECTED: UE remains in connection with the 5G-RAN and 5GC in this state.

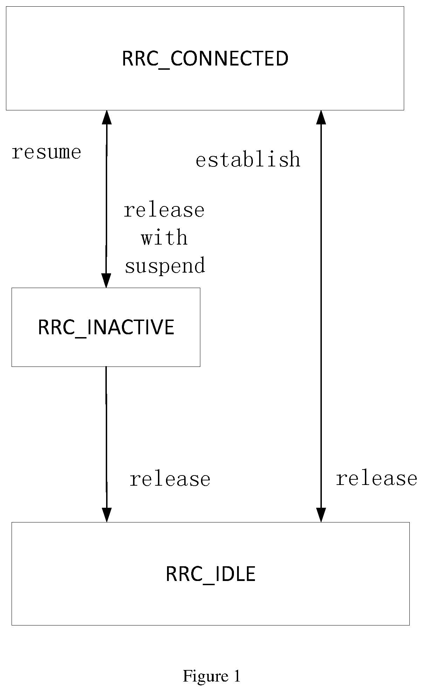

RRC states transition process is shown in Figure 1.

The main principle of the RRC_INACTIVE state is that the UE is able to return to the RRC_CONNECTED state as quickly and efficiently as possible. When the UE transforms to RRC_INACTIVE state, both the UE and the RAN store all the information necessary to quickly resume to RRC_CONNECTED state.

An UE in RRC_INACTIVE state may initiate a resume procedure when there is a need to transmit data or signaling. In this case, the UE transmits an RRC resume request that includes the UE identifier and a security token to verify the legitimacy of the resume request. After the UE configuration is successfully retrieved, the target node (e.g. the base station that receive the RRC resume request) resumes the stored configuration at the UE and applies any necessary modifications, such as the configuration of measurements and the addition or removal of bearers. The respective RRC resume message is integrity protected and encrypted using the security context stored in the network and the UE.

In the RRC_INACTIVE state, the UE is in a power-saving sleep state, but it still retains part of the RAN context (security context, UE capability information, etc.), and can be quickly awakened by a message to transfer from the RRC_INACTIVE state to the RRC_CONNECTED state. NR Release 17 supports direct transmission of small data transmission (SDT) in the RRC_INACTIVE state.

A current SDT procedure is described as follows.

A SDT configuration (e.g. CG based SDT (CG-SDT) configuration) has been configured to the UE when the UE is released to RRC_INACTIVE state. Several CG occasions for SDT (e.g. CG resources) are configured in the CG-SDT configuration. Alternatively, several CG configurations for SDT are configured. When SDT data arrives, the UE initiates the selection between SDT and non-SDT, also between CG-SDT procedure and RACH based SDT (RA-SDT) procedure if SDT is selected. In particular, if CG-SDT criteria are met, UE selects CG-SDT and initiate SDT procedure; else if RA-SDT criteria are met: UE selects RA-SDT and initiate SDT procedure; else, UE initiates non-SDT procedure. CG-SDT criteria are considered met, if 1) available data volume <= data volume threshold and 2) RSRP is greater than or equal to a configured threshold. RA-SDT criteria is considered met, if 1) available data volume <= data volume threshold; 2) RSRP is greater than or equal to a configured threshold; and 3) 4 step RA-SDT resources are configured on the selected UL carrier and criteria to select 4 step RA-SDT is met; or 2 step RA-SDT resources are configured on the selected UL carrier and criteria to select 2 step RA-SDT is met.

A 4 step RACH procedure (that can be used as RA-SDT) comprises: UE transmits a preamble (Msg1) on PRACH to a network device (e.g. gNB)); the network device transmits a response (Msg2) to the preamble); the UE transmits uplink information (Msg3) according to the response; and the network device transmits a contention resolution message (Msg4) according to the uplink information. A 2-step RACH procedure (that can be used as RA-SDT) comprises the transmission of MsgA and MsgB, wherein MsgA corresponds to a combination of Msg1 and Msg3 and MsgB corresponds to a combination of Msg2 and Msg4. It can be seen that RA-SDT (4-step RA-SDT or 2-step RA-SDT) allows SDT to use an uplink grant received via a random access procedure for SDT.

On the other hand, CG-SDT allows SDT to use a configured grant without performing a random access procedure.

The above-described SDT (e.g. RA-SDT and CG-SDT) can be referred to as UL (uplink) SDT. In addition, the above-described SDT is initiated by the UE, which can be referred to as MO (Mobile originate) SDT.

In the MO SDT initiated by the UE, a network device (e.g. gNB) can also transmit DL data (e.g. small data). Such DL small data transmission can be referred to as DL SDT. In addition, SDT can be initiated by the network device (e.g. gNB). The SDT that is initiated by the gNB is referred to as MT (Mobile terminated) SDT. An MT SDT procedure is initiated by the network device (e.g. gNB) for a downlink (DL) data transmission. As a whole, DL SDT means an MT SDT (initiated by gNB) or an MO SDT (initiated by UE) in which DL data can be transmitted or the DL data transmission in MO SDT or the DL data transmission in MT SDT while the UE remains in RRC_INACTIVE state without transiting to RRC_CONNECTED state.

An ongoing DL SDT could fail because of radio link problem or UE mobility. From perspective of performance, DL data loss during SDT (e.g. DL SDT) should be avoided. In MO SDT, it is expected that PDCP level retransmission is performed for the unacknowledged PDCP PDUs. That is, in DL SDT in which DL data is transmitted in MO SDT, DL PDCP level retransmission is performed for the unacknowledged DL PDCP PDUs.

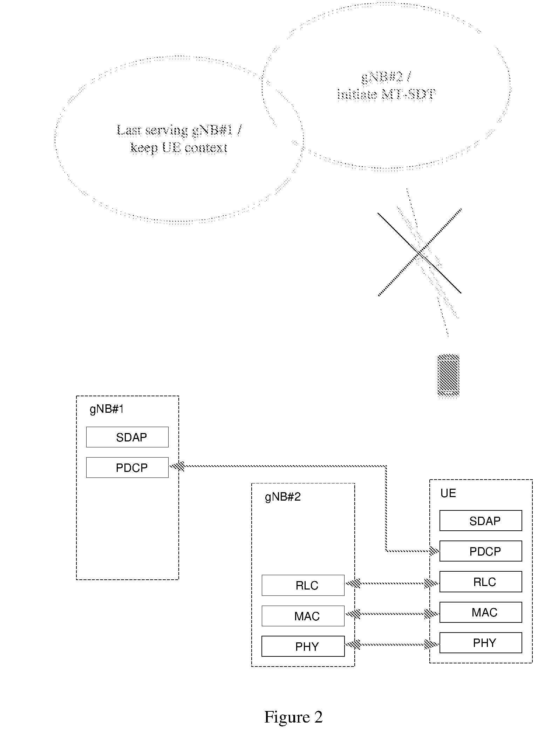

For DL SDT, the radio link problem can be identified by multiple retransmissions in RLC layer, e.g. the maximum RLC retransmission threshold (e.g. reTX) is reached. Figure 2 illustrates a scenario of DL SDT without anchor relocation. The last serving gNB (i.e. the last serving cell is managed by the last serving gNB) of the UE is gNB#1. However, the UE moves to the coverage of another gNB (e.g. gNB#2) . The other gNB (e.g. gNB#2) initiates MT SDT (e.g. under the control of gNB#1) or the UE initiates MO SDT to gNB#2. gNB#2 does not have the UE context (suppose that gNB#1 does not provide the UE context to gNB#2) . In other words, the UE is still anchored to gNB#1 rather than being relocated to gNB#2 (i.e. without anchor relocation) . In this condition, the potential higher layer reTX (e.g. PDCP reTX) and the control of the UE (e.g. state transition) are controlled by the last serving gNB#1. That is, the PDCP layer of the UE is connected to the PDCP layer of gNB#1. On the other hand, gNB#2 is responsible for the lower layer (e.g. RLC layer, MAC layer, and PHY layer) transmission. That is, The RLC layer, MAC layer, and PHY layer of the UE are connected, respectively, to the RLC layer, MAC layer, and PHY layer of gNB#2. gNB#2 identify the radio link problem by any of the RLC layer, MAC layer, and PHY layer. However, how can gNB#2 notify the transmission status to gNB#1 to perform PDCP level retransmission?

WO2021257856A1 discloses a wireless device in a radio resource control, RRC, idle or an RRC inactive state that communicates via a first cell of a first base station. Based on a communication failure of the first cell, the wireless device in the RRC idle state or RRC inactive state transmits an RRC request message to a second base station. The RRC request message comprises a cell radio network temporary identifier, C-RNTI, of the first cell.

This invention targets the above issue.

### BRIEF SUMMARY

Methods and apparatuses for data transmission in DL SDT are disclosed.

In one embodiment, a network device comprises a processor; and a transceiver coupled to the processor, wherein the processor is configured to determine whether radio link problem occurs during downlink (DL) small data transmission (SDT) to a terminal device that supports an Radio Resource Control (RRC) non-CONNECTED state; and transmit, via the transceiver, to another network device that has the context of the terminal device, an indication of occurrence of the radio link problem if the occurrence of the radio link problem is determined, or an indication of occurrence or non-occurrence of the radio link problem if a request for the indication is received, via the transceiver, from the other network device. The processor may be configured to determine successful or unsuccessful transmission of each RLC SDU, and the occurrence of radio link problem is determined when at least one RLC SDU is transmitted unsuccessfully.

In one embodiment, the processor is further configured to receive, via the transceiver, an indication of the length of PDCP SN. The processor may be further configured to determine a PDCP SN for each of the PDCP PDU or PDCP SDU received from the other network device based on the length of PDCP SN. In particular, the indication is an SN indication to indicate successful or unsuccessful transmission of RLC SDU(s) and/or PDCP PDU(s) or PDCP SDU(s), where the SN indication includes one or more PDCP SNs each of which identifies a PDCP PDU or PDCP SDU or RLC SDU.

In another embodiment, the processor is further configured to set an index to each of the PDCP PDU received from the other network device in order, or receive, via the transceiver, from the other network device, an index associated with each of the PDCP PDU received from the other network device. In particular, the indication is an index indication to indicate successful or unsuccessful transmission of RLC SDU(s) and/or PDCP PDU(s) or PDCP SDU(s), where the index indication includes one or more indices each of which identifies a PDCP PDU or PDCP SDU or RLC SDU.

In another embodiment, a network device comprises a processor; and a transceiver coupled to the processor, wherein the processor is configured to control downlink (DL) small data transmission (SDT) by another network device with a terminal device that supports an Radio Resource Control (RRC) non-CONNECTED state by determining context of the terminal device; and receive, via the transceiver, an indication of occurrence or non-occurrence of the radio link problem during the DL SDT from the other terminal device by transmitting, via the transceiver, to the other network device, a request for the indication, or an indication of occurrence of the radio link problem during the DL SDT from the other terminal device.

In some embodiment, the processor is further configured to transmit, via the transceiver, to the other network device, an indication of the length of PDCP SN. In particular, the indication is an SN indication to indicate successful or unsuccessful transmission of RLC SDU(s) and/or PDCP PDU(s) or PDCP SDU(s), where the SN indication includes one or more PDCP SNs each of which identifies a PDCP PDU or PDCP SDU or RLC SDU.

In some embodiment, the processor is further configured to set an index to each of the PDCP PDU transmitted to the other network device in order, or transmit, via the transceiver, to the other network device, an index associated with each of the PDCP PDU transmitted to the other network device. In particular, the indication is an index indication to indicate successful or unsuccessful transmission of RLC SDU(s) and/or PDCP PDU(s) or PDCP SDU(s), where the index indication includes one or more indices each of which identifies a PDCP PDU or PDCP SDU or RLC SDU.

In another embodiment, a method performed by a network device comprises determining whether radio link problem occurs during downlink (DL) small data transmission (SDT) to a terminal device that supports an Radio Resource Control (RRC) non-CONNECTED state; and transmitting to another network device that has the context of the terminal device, an indication of occurrence of the radio link problem if the occurrence of the radio link problem is determined, or an indication of occurrence or non-occurrence of the radio link problem if a request for the indication is received from the other network device.

In yet another embodiment, a method performed by a network device comprises controlling downlink (DL) small data transmission (SDT) by another network device with a terminal device that supports an Radio Resource Control (RRC) non-CONNECTED state by determining context of the terminal device; and receiving an indication of occurrence or non-occurrence of the radio link problem during the DL SDT from the other terminal device by transmitting a request for the indication to the other network device, or an indication of occurrence of the radio link problem during the DL SDT from the other terminal device.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments, and are not therefore to be considered to be limiting of scope, the embodiments will be described and explained with additional specificity and detail through the use of the accompanying drawings, in which:
Figure 1 illustrates RRC states in NR;
Figure 2 illustrates a scenario of DL SDT without anchor relocation;
Figure 3 illustrates a scenario of UE reselecting a neighboring cell (or neighboring gNB);
Figure 4 illustrates another scenario of UE reselecting a neighboring cell (or neighboring gNB);
Figure 5 is a schematic flow chart diagram illustrating an embodiment of a method;
Figure 6 is a schematic flow chart diagram illustrating a further embodiment of a method;
Figure 7 is a schematic flow chart diagram illustrating an embodiment of a method;
Figure 8 is a schematic flow chart diagram illustrating a further embodiment of a method; and
Figure 9 is a schematic block diagram illustrating apparatuses according to one embodiment.

### DETAILED DESCRIPTION

As will be appreciated by one skilled in the art that certain aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may generally all be referred to herein as a "circuit", "module" or "system". Furthermore, embodiments may take the form of a program product embodied in one or more computer readable storage devices storing machine-readable code, computer readable code, and/or program code, referred to hereafter as "code". The storage devices may be tangible, non-transitory, and/or non-transmission. The storage devices may not embody signals. In a certain embodiment, the storage devices only employ signals for accessing code.

Certain functional units described in this specification may be labeled as "modules", in order to more particularly emphasize their independent implementation. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but, may include disparate instructions stored in different locations which, when joined logically together, include the module and achieve the stated purpose for the module.

Indeed, a module of code may contain a single instruction, or many instructions, and may even be distributed over several different code segments, among different programs, and across several memory devices. Similarly, operational data may be identified and illustrated herein within modules and may be embodied in any suitable form and organized within any suitable type of data structure. This operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing code. The storage device may be, for example, but need not necessarily be, an electronic, magnetic, optical, electromagnetic, infrared, holographic, micromechanical, or semiconductor system, apparatus, or device, or any suitable combination of the foregoing.

A non-exhaustive list of more specific examples of the storage device would include the following: an electrical connection having one or more wires, a portable computer diskette, a hard disk, random access memory (RAM), read-only memory (ROM), erasable programmable read-only memory (EPROM or Flash Memory), portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Code for carrying out operations for embodiments may include any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may be executed entirely on the user's computer, partly on the user's computer, as a stand-alone software package, partly on the user's computer and partly on a remote computer or entirely on the remote computer or server. In the very last scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment", "an embodiment", or similar language means that a particular feature, structure, or characteristic described in connection with the embodiment is included in at least one embodiment. Thus, appearances of the phrases "in one embodiment", "in an embodiment", and similar language throughout this specification may, but do not necessarily, all refer to the same embodiment, but mean "one or more but not all embodiments" unless expressly specified otherwise. The terms "including", "comprising", "having", and variations thereof mean "including but are not limited to", unless otherwise expressly specified. An enumerated listing of items does not imply that any or all of the items are mutually exclusive, otherwise unless expressly specified. The terms "a", "an", and "the" also refer to "one or more" unless otherwise expressly specified.

Furthermore, described features, structures, or characteristics of various embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid any obscuring of aspects of an embodiment.

Aspects of different embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general purpose computer, special purpose computer, or other programmable data processing apparatus to produce a machine, such that the instructions, which are executed via the processor of the computer or other programmable data processing apparatus, create means for implementing the functions specified in the schematic flowchart diagrams and/or schematic block diagrams for the block or blocks.

The code may also be stored in a storage device that can direct a computer, other programmable data processing apparatus, or other devices, to function in a particular manner, such that the instructions stored in the storage device produce an article of manufacture including instructions which implement the function specified in the schematic flowchart diagrams and/or schematic block diagrams block or blocks.

The code may also be loaded onto a computer, other programmable data processing apparatus, or other devices, to cause a series of operational steps to be performed on the computer, other programmable apparatus or other devices to produce a computer implemented process such that the code executed on the computer or other programmable apparatus provides processes for implementing the functions specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that in some alternative implementations, the functions noted in the block may occur out of the order noted in the Figures. For example, two blocks shown in succession may substantially be executed concurrently, or the blocks may sometimes be executed in the reverse order, depending upon the functionality involved. Other steps and methods may be conceived that are equivalent in function, logic, or effect to one or more blocks, or portions thereof, to the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each Figure may refer to elements of proceeding figures. Like numbers refer to like elements in all figures, including alternate embodiments of like elements.

Reference will now be made in detail to some embodiments of the present application, examples of which are illustrated in the accompanying drawings. To facilitate understanding, embodiments are provided under specific network architecture and new service scenarios, such as 3GPP 5G, 3GPP LTE, 3GPP NR-U, NR Radio Access operating with shared spectrum channel access and so on. It is contemplated that along with the developments of network architectures and new service scenarios, all embodiments in the present application are also applicable to similar technical problems. Moreover, the terminologies recited in the present application may change, which should not affect the principle of the present application. Embodiments of the present disclosure can also be applied to unlicensed spectrum scenario.

SDT (small data transmission) can be supported not only in RRC_INACTIVE state but also in RRC_IDLE state. The RRC_INACTIVE state and the RRC_IDLE state can be collectively referred to as RRC non-CONNECTED state. All of the embodiments apply to a terminal device (e.g. UE) in RRC non-CONNECTED state.

In the following description, "paging for MT-SDT" means a message or an indication for the upcoming DL-triggered small data transmission. The name of the expression "paging for MT-SDT" may be replaced with other name(s). However, the meaning of the expression does not change. The paging for MT-SDT received by the UE can be contained in a message. The UE that received the indication is expected to receive the DL small data in RRC_INACTIVE state. The message can be a paging message, a short message, a short messages indicator, or a new broadcast message or a new RRC message or a new message on Uu interface.

Further, in the following description, "Xn interface" (e.g. "X2 interface") means any interface between network nodes. Further, the network nodes (NW nodes) are assumed to manage one or more cells that are within an RNA configured to the UE. The RNA can cover a single or multiple cells, and shall be contained within the CN registration area. Xn connectivity should be available within the RNA. A network node is for example a base station (e.g. gNB).

The base station (e.g. gNB) (which can also be referred to as BS, network device, network node, etc) may transmit the paging for MT-SDT to the UE when downlink (DL) data arrives at the gNB and the size of the DL data meets certain criteria (e.g. the size of the DL data is smaller than a pre-defined threshold). When the paging for MT-SDT is received by a UE in RRC non-CONNECTED (e.g. RRC_IDLE or RRC_INACTIVE) state, the UE is expected to receive the DL data as SDT without transiting to RRC_CONNECTED state.

On the other hand, when downlink (DL) data arrives at the gNB, if there is an ongoing MO SDT (e.g. CG-SDT or RA-SDT), the gNB may transmit the DL data by the MO SDT.

Hereinafter, DL SDT means an MT SDT (initiated by gNB) or an MO SDT (initiated by UE) in which DL data can be transmitted or the DL data transmission in MO SDT or the DL data transmission in MT SDT while the UE remains in RRC non-CONNECTED state without transiting to RRC_CONNECTED state. In other words, DL data transmission in DL SDT can also be described as DL data transmission in SDT.

It is expected that the DL data transmission completes successfully in DL SDT procedure. However, it may happen that, before the DL data transmission in DL SDT completes, the UE reselects a neighboring cell or the UE is blocked because of the bad channel condition of the serving cell (that can be collectively referred to as "radio link problem"). In the scenario of Figure 2, gNB#2 can detect the radio link problem by identifying unsuccessful transmission of RLC SDUs. However, since gNB#1 keeps the UE context and is responsible for PDCP retransmission, gNB#2 cannot identify unsuccessful transmission of PDCP PDU.

In the following description, it is assumed that the neighboring cell and the (last) serving cell belong to different base stations (e.g. different gNBs). Accordingly, the serving cell can be represented by serving gNB, while the neighboring cell can be represented by neighboring gNB.

In Figure 2, the last serving gNB (i.e. the last serving cell) is gNB#1. Another gNB (e.g. gNB#2) initiates MT SDT (e.g. under the control of gNB#1). Accordingly, gNB#2 that initiates the MT SDT does not have the UE context (suppose that gNB#1 does not provide the UE context to gNB#2). In other words, the gNB#2 forwards the content received from the serving gNB#1 to the UE during the MT SDT. Alternatively, gNB#2 transmits DL data in MO SDT initiated by the UE.

As a whole, a DL-triggered SDT (e.g. MT SDT) is initiated or transmitted by the network node #1 (e.g. gNB#1) or the DL data during UL-triggered SDT (e.g. MO SDT) is transmitted by the network node #1 (e.g. gNB#1) to a UE that is in RRC non-CONNECTED state and configured with SDT (e.g. the UE is configured with SDT DRBs and/or SDT SRBs and/or resources for SDT). DL data transmission is performed in SDT (e.g. the MT SDT initiated by the gNB, or the DL data during the MO SDT initiated by the UE).

In one situation, during the DL SDT (e.g. gNB#2 initiated MT SDT or UE initiated MO SDT), the radio link problem can be detected by gNB#2 e.g. by identifying unsuccessful transmission of RLC SDUs. gNB#2 is necessary to notify gNB#1 that keeps UE context of the transmission status. Correspondingly, the gNB#1 can decide whether to perform higher layer retransmission. In another situation, gNB#1 may hope to know the transmission status of the PDCP PDUs (that were transmitted from gNB#1 to gNB#2), i.e. whether the PDCP PDUs have been successfully (or unsuccessfully) transmitted in the DL SDT targeting gNB#2. The following first to third embodiments propose solutions for both situations.

A first embodiment relates to notifying the length of PDCP serial number (SN) from last serving gNB (e.g. gNB#1) to SDT target gNB (e.g. gNB#2), and transmitting an SN indication from gNB#2 to gNB#1.

The length of PDCP SN can be variable size, e.g. 12 or 18 bits. Depending on the length of the PDCP SN, gNB#2 can identify the position of the PDCP SN in the PDCP PDU received from gNB#1, and accordingly identify the PDCP SN.

The length of PDCP SN (e.g. 12 or 18 bits) is configured to the UE when MT SDT or MO SDT is initiated or the related configuration in RRC_CONNECTED state is maintained or kept or reused in SDT (e.g. MO SDT and/or MT SDT).

The length of PDCP SN is informed or indicated from the last serving gNB (e.g. gNB#1) to the SDT target gNB (e.g. gNB#2). The length of PDCP SN is informed or indicated from the last serving gNB (e.g. gNB#1) to the SDT target gNB (e.g. gNB#2) when the DL SDT arrives or when the tunnel for SDT is setup, or it is up to the gNB implementation to determine when to inform or indicate the length of PDCP SN. The length of PDCP SN can be informed or indicated in various manners. For example, the length of PDCP SN can be indicated in a new message over Xn interface between gNB#1 and gNB#2. Alternatively, the length of PDCP SN can be indicated during the gNB#2 trying to retrieve the UE context of the UE (to which the DL SDT is transmitted). For example, gNB#2 receives RETRIEVE UE CONTEXT FAILURE message or other message used to reject or partly reject the context retrieve related request. The length of PDCP SN may be contained in the RETRIEVE UE CONTEXT FAILURE message or the other message. Further alternatively, the length of PDCP SN can be contained in the SDT related RLC bearer configuration for SDT DRB or SRB transmitted from gNB#1 to gNB#2. Still alternatively, the length of PDCP SN can be configured to be a value (e.g. 12 or 18 bits)

Upon receiving the length of PDCP SN configured to the UE (to which the DL SDT is transmitted), gNB#2 can identify the position of the PDCP SN in the PDCP PDU received from gNB#1, and accordingly identify the PDCP SN of each PDCP PDU.

Each PDCP PDU identified by a PDCP SN corresponds to one RLC SDU. Depending on the PDCP SN, gNB#2 can identify to which PDCP PDU each RLC SDU corresponds. Incidentally, since one PDCP PDU corresponds to one RLC SDU, the PDCP SN identifying a PDCP PDU can also identify the RLC SDU corresponding to the PDCP PDU. In addition, one PDCP PDU corresponds to one PDCP SDU in a one-to-one manner. So, each PDCP SN can indicate, in addition to one PDCP PDU, one PDCP SDU that corresponds to the one PDCP PDU. That is, gNB#2 can also identify to which PDCP SDU each RLC SDU corresponds.

The SDT target gNB (e.g. gNB#2) can determine (or identify) whether each RLC SDU is transmitted successfully or unsuccessfully. For example, when radio link problem is detected (e.g. when the reported UE RSRP is lower than a threshold, or the number of RLC layer retransmission times (RLC reTX) or the MAC layer retransmission times (MAC reTX) have reached a threshold), gNB#2 can determine that an RLC SDU is transmitted unsuccessfully.

Since one RLC SDU corresponds to one PDCP PDU or one PDCP SDU, when an RLC SDU transmits successfully or unsuccessfully, the PDCP PDU or SDU that corresponds to the RLC SDU also transmits successfully or unsuccessfully.

An SN indication can be transmitted from gNB#2 to gNB#1 (e.g. a higher layer (e.g. PDCP layer) of gNB#1). The SN indication may include one or multiple PDCP SNs to indicate whether one or multiple PDCP PDUs or SDUs each of which corresponds to one of the included PDCP SNs are transmitted successfully or unsuccessfully. For example, one PDCP SN may be included in the SN indication. The one PDCP SN may indicate the last successfully transmitted PDCP PDU or SDU, e.g. with an indication of "last successful transmission". Alternatively, the one PDCP SN may indicate the first unsuccessfully transmitted PDCP PDU or SDU, e.g. with an indication of "first unsuccessful transmission". Alternatively, multiple PDCP SNs may be included in the SN indication. The multiple PDCP SNs may indicate successful transmission of multiple PDCP PDUs or SDUs identified by the multiple PDCP SNs, or indicate unsuccessful transmission of multiple PDCP PDUs or SDUs identified by the multiple PDCP SNs.

The SN indication can be transmitted from gNB#2 to gNB#1 if the gNB#1 requests gNB#2 to do so, or if gNB#2 detects radio link problem. The detection of the radio link problem may be configured by gNB#1, or pre-defined (or pre-specified), or up to implementation of gNB#2. When the gNB#1 sends a request to gNB#2 for transmitting the SN indication from gNB#2 to gNB#1, radio link problem may happen or may not happen.

A second embodiment relates to simply notifying successful or unsuccessful transmission from gNB#2 to gNB#1.

A message to indicate successful or unsuccessful transmission can be transmitted from gNB#2 to gNB#1 if the gNB#1 requests gNB#2 to do so. Alternatively, if gNB#2 detects radio link problem (e.g. when the reported UE RSRP is lower than a threshold, or the number of RLC layer retransmission times (RLC reTX) or the MAC layer retransmission times (MAC reTX) have reached a threshold), a message to indicate unsuccessful transmission can be transmitted from gNB#2 to gNB#1.

The message can be a new XnAP message or a new IE included in an XnAP message or an existing XnAP message with a new message type or an existing XnAP message with a new cause value or a message that is used to partially release the UE context. In particular, the existing message to include the new IE or message type can be the UE Context Release message.

The detection of the radio link problem may be configured by gNB#1, or pre-defined (or pre-specified), or up to implementation of gNB#2. The radio link problem is detected for example when the reported UE RSRP is lower than a threshold, or the number of RLC layer retransmission times (RLC reTX) or the MAC layer retransmission times (MAC reTX) have reached a threshold.

If gNB#2 receives gNB#1's request for transmitting the message for indicating successful or unsuccessful transmission, gNB#2 responds to gNB#1 with the indication of successful or unsuccessful transmission.

On the other hand, if radio link problem is detected by gNB#2, no matter whether a request for transmitting the message for indicating successful or unsuccessful transmission is received from gNB#1, gNB#2 can transmit a message indicating successful or unsuccessful transmission to gNB#1. For example, the message can be transmitted upon the determination of the first unsuccessfully transmitted RLC SDU.

A third embodiment relates to configuring an index to each of the transmitted PDCP PDU in DL SDT, and transmitting the index from gNB#2 to gNB#1.

In the first embodiment, the length of the PDCP SN is notified from gNB#1 to gNB#2 so that gNB#2 can identify the position of PDCP SN in the PDCP PDU, and accordingly identify the PDCP SN of each PDCP PDU or SDU. That is, according to the first embodiment, each PDCP PDU or SDU can be identified by PDCP SN. According to the third embodiment, an index is used to identify each PDCP PDU or SDU.

The last serving gNB (e.g. gNB#1) and the SDT target gNB (e.g. gNB#2) should have a common understanding on which index identifies which PDCP PDU or SDU.

In one implementation, the index to each of the transmitted PDCP PDUs in DL SDT can be separately set in each of gNB#1 and gNB#2 in order. Since the index is set in the same order in each of gNB#1 and gNB#2, gNB#1 and gNB#2 have the common understanding on which index identifies which PDCP PDU or SDU.

In another implementation, the index to each of the transmitted PDCP PDU in DL SDT is associated in gNB#1 and notified to gNB#2, which make sure that gNB#1 and gNB#2 have the common understanding on which index identifies which PDCP PDU or SDU.

Therefore, according to the third embodiment, each PDCP PDU or SDU can be identified by an index. Each PDCP PDU or SDU identified by an index corresponds to one RLC SDU. Depending on the index, gNB#2 can identify to which PDCP PDU or SDU each RLC SDU corresponds.

The SDT target gNB (e.g. gNB#2) can determine (or identify) whether each RLC SDU is transmitted successfully or unsuccessfully.

According to index associated with each PDCP PDU or SDU, gNB#2 can determine whether each PDCP PDU or SDU identified by the index is transmitted successfully or unsuccessfully, according to whether the RLC SDU that corresponds to the PDCP PDU or SDU is transmitted successfully or unsuccessfully.

An index indication can be transmitted from gNB#2 to gNB#1 (e.g. a higher layer (e.g. PDCP layer) of gNB#1). The index indication may include one or multiple indices to indicate whether one or multiple PDCP PDUs or SDUs each of which corresponds to one of the indices are transmitted successfully or unsuccessfully.

The index indication can be transmitted from gNB#2 to gNB#1 if the gNB#1 requests gNB#2 to do so, or if gNB#2 detects radio link problem. The detection of the radio link problem may be configured by gNB#1, or pre-defined (or pre-specified), or up to implementation of gNB#2. When the gNB#1 sends a request to gNB#2 for transmitting the transmission status or index indication from gNB#2 to gNB#1, radio link problem may happen or may not happen.

A fourth embodiment relates to validation of UE by gNB#2.

The last serving gNB (e.g. gNB#1) implicitly or explicitly allows the SDT target gNB (e.g. gNB#2) to validate the secured token or the ResumeMAC-I or shortResumeMAC-I used by the UE.

In order to validate the secured token or the ResumeMAC-I or shortResumeMAC-I used by the UE, the secured token or the ResumeMAC-I or shortResumeMAC-I and/or related information shall be sent from the gNB#1 to the gNB#2. The secured token or the ResumeMAC-I or shortResumeMAC-I and/or related information can be included in the UE context related information or in the RAN paging message from gNB#1 to gNB#2. The procedure can be applied to the RNAU or SDT or other procedure when the UE is in non RRC-CONNECTED state.

If the gNB#2 fails to validate the secured token or the ResumeMAC-I or shortResumeMAC-I used by the UE, the gNB#2 informs the failure to the gNB#1. The failure can be informed by sending a new XnAP message or a new IE included in an XnAP message or an existing XnAP message with a new message type or an existing XnAP message with a new cause value or a message that is used to partial release the UE context. The existing message to include the new IE or message type can be the UE Context Release message.

A fifth embodiment relates to UE context notification.

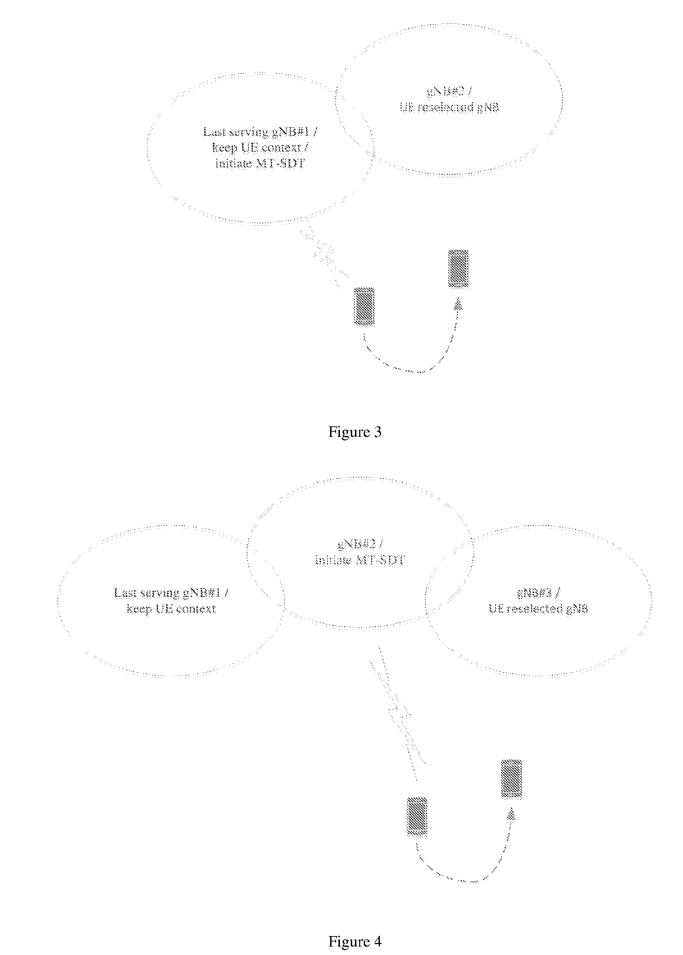

Figure 3 illustrates a scenario of UE reselecting a neighboring cell (or neighboring gNB). The last serving gNB is gNB#1 (i.e. the last serving cell is managed by gNB#1). During an ongoing SDT (MT SDT or MO SDT) performed between gNB#1 and the UE, the UE reselects a neighboring gNB (e.g. gNB#2) (i.e. the neighboring cell is managed by gNB#2).

gNB#2 is necessary to retrieve the UE context of the UE that reselects gNB#2. This can be done by initiating a Retrieve UE Context procedure. gNB#1 can decide that the gNB reselected by the UE is gNB#2. For example, gNB#2 can be decided as the reselected gNB by the UE according to AI assistance or mobility prediction or positioning related technology, etc. So, gNB#1 can decide whether to provide, to gNB#2, the UE context of the UE that reselects gNB#2 before the Retrieve UE Context procedure (e.g. before receiving a request message of the Retrieve UE Context procedure from gNB#2). That is, the gNB#1 can send UE context related information or reject the UE context retrieving related information or send partial of the UE context related information to the gNB#2 before the request message of the Retrieve UE Context procedure is received from gNB#2. The related information (the UE context related information, a rejection information to the Retrieve UE Context procedure, or partial of the UE context related information) can be sent with the RAN paging message from gNB#1 to gNB#2.

Figure 4 illustrates another scenario of UE reselecting a neighboring cell (or neighboring gNB). The last serving gNB (i.e. the last serving cell) is gNB#1. The SDT target gNB is gNB#2 that is under the control of gNB#1. gNB#2 does not have the UE context (suppose that gNB#1 does not provide the UE context to gNB#2). During an ongoing SDT (MT SDT or MO SDT) performed between gNB#2 and the UE, the UE reselects a neighboring gNB (e.g. gNB#3) (i.e. the neighboring cell belongs to gNB#3).

gNB#3 is necessary to retrieve the UE context of the UE that reselects gNB#3. This can be done by initiating a Retrieve UE Context procedure. gNB#1 can decide that the gNB reselected by the UE is gNB#3. For example, gNB#3 can be decided as the reselected gNB by the UE according to AI assistance or mobility prediction or positioning related technology, etc. So, gNB#1 can decide whether to provide the UE context of the UE that reselects gNB#3 to gNB#3 before the Retrieve UE Context procedure (e.g. before receiving a request message of the Retrieve UE Context procedure from gNB#3). That is, the gNB#1 can send UE context related information or reject the UE context retrieving related information or send partial of the UE context related information to the gNB#3 before the request message of the Retrieve UE Context procedure is received from gNB#3. The related information (the UE context related information, a rejection information to the Retrieve UE Context procedure, or partial of the UE context related information) can be sent with the RAN paging message from gNB#1 to gNB#3.

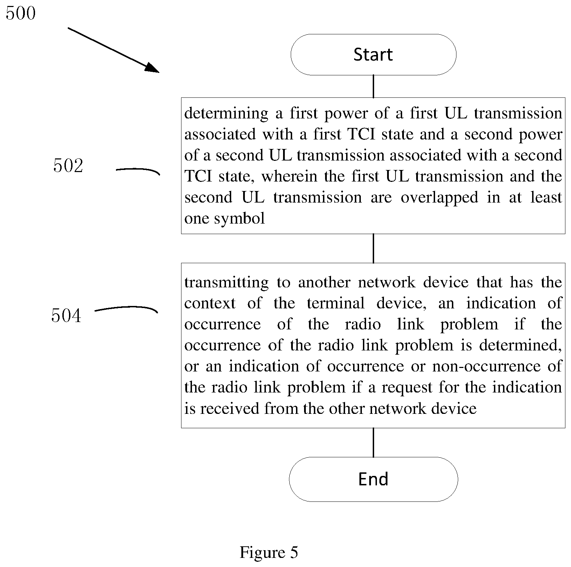

Figure 5 is a schematic flow chart diagram illustrating an embodiment of a method 500 according to the present application. In some embodiments, the method 500 is performed by an apparatus, such as a base unit or a network device (e.g. gNB). In certain embodiments, the method 500 may be performed by a processor executing program code, for example, a microcontroller, a microprocessor, a CPU, a GPU, an auxiliary processing unit, a FPGA, or the like.

The method 500 may be performed by a network device, e.g. gNB#2 described in the first to the third embodiments. The method 500 comprises 502 determining whether radio link problem occurs during downlink (DL) small data transmission (SDT) to a terminal device that supports an Radio Resource Control (RRC) non-CONNECTED state; and 504 transmitting to another network device that has the context of the terminal device, an indication of occurrence of the radio link problem if the occurrence of the radio link problem is determined, or an indication of occurrence or non-occurrence of the radio link problem if a request for the indication is received from the other network device. The method may further comprise determining successful or unsuccessful transmission of each RLC SDU, and the occurrence of radio link problem is determined when at least one RLC SDU is transmitted unsuccessfully.

In one embodiment, the method may further comprise receiving an indication of the length of PDCP SN. The method may further comprise determining a PDCP SN for each of the PDCP PDU or PDCP SDU received from the other network device based on the length of PDCP SN. In particular, the indication is an SN indication to indicate successful or unsuccessful transmission of RLC SDU(s) and/or PDCP PDU(s) or PDCP SDU(s), where the SN indication includes one or more PDCP SNs each of which identifies a PDCP PDU or PDCP SDU or RLC SDU.

In another embodiment, the method may further comprise setting an index to each of the PDCP PDU received from the other network device in order, or receiving from the other network device an index associated with each of the PDCP PDU received from the other network device. In particular, the indication is an index indication to indicate successful or unsuccessful transmission of RLC SDU(s) and/or PDCP PDU(s) or PDCP SDU(s), where the index indication includes one or more indices each of which identifies a PDCP PDU or PDCP SDU or RLC SDU.

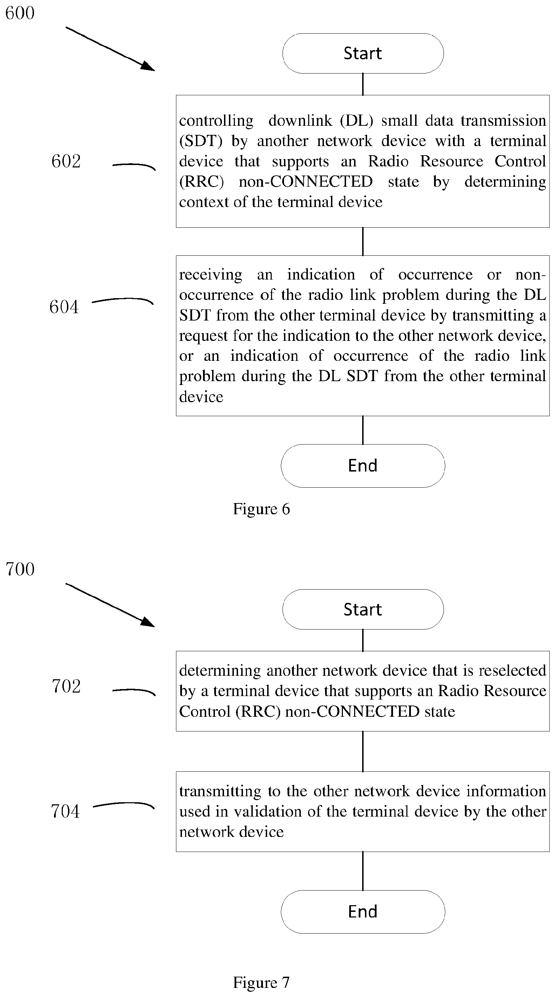

Figure 6 is a schematic flow chart diagram illustrating a further embodiment of a method 600 according to the present application. In some embodiments, the method 600 is performed by an apparatus, such as a base unit or a network device (e.g. gNB). In certain embodiments, the method 600 may be performed by a processor executing program code, for example, a microcontroller, a microprocessor, a CPU, a GPU, an auxiliary processing unit, a FPGA, or the like.

The method 600 may be performed by a network device, e.g. gNB#1 described in the first to the third embodiments. The method 600 comprises 602 controlling downlink (DL) small data transmission (SDT) by another network device with a terminal device that supports an Radio Resource Control (RRC) non-CONNECTED state by determining context of the terminal device; and 604 receiving an indication of occurrence or non-occurrence of the radio link problem during the DL SDT from the other terminal device by transmitting a request for the indication to the other network device, or an indication of occurrence of the radio link problem during the DL SDT from the other terminal device.

In one embodiment, the method may further comprise transmitting to the other network device an indication of the length of PDCP SN. In particular, the indication is an SN indication to indicate successful or unsuccessful transmission of RLC SDU(s) and/or PDCP PDU(s) or PDCP SDU(s), where the SN indication includes one or more PDCP SNs each of which identifies a PDCP PDU or PDCP SDU or RLC SDU.

In another embodiment, the method may further comprise setting an index to each of the PDCP PDU transmitted to the other network device in order, or transmitting to the other network device an index associated with each of the PDCP PDU transmitted to the other network device. In particular, the indication is an index indication to indicate successful or unsuccessful transmission of RLC SDU(s) and/or PDCP PDU(s) or PDCP SDU(s), where the index indication includes one or more indices each of which identifies a PDCP PDU or PDCP SDU or RLC SDU.

Figure 7 is a schematic flow chart diagram illustrating an embodiment of a method 700 according to the present application. In some embodiments, the method 700 is performed by an apparatus, such as a base unit or a network device (e.g. gNB). In certain embodiments, the method 700 may be performed by a processor executing program code, for example, a microcontroller, a microprocessor, a CPU, a GPU, an auxiliary processing unit, a FPGA, or the like.

The method 700 may be performed by a network device, e.g. gNB#1 described in the fourth and the fifth embodiments. The method 700 comprises 702 determining another network device that is reselected by a terminal device that supports an Radio Resource Control (RRC) non-CONNECTED state; and 704 transmitting to the other network device information used in validation of the terminal device by the other network device.

In some embodiment, the information used in validation of the terminal device is secured token or ResumeMAC-I or shortResumeMAC-I and/or related information used in validation of the terminal device and/or UE context related information of the terminal device.

In some embodiment, the determination of the other network device is made before receiving a request for Retrieve UE Context procedure from the other network device.

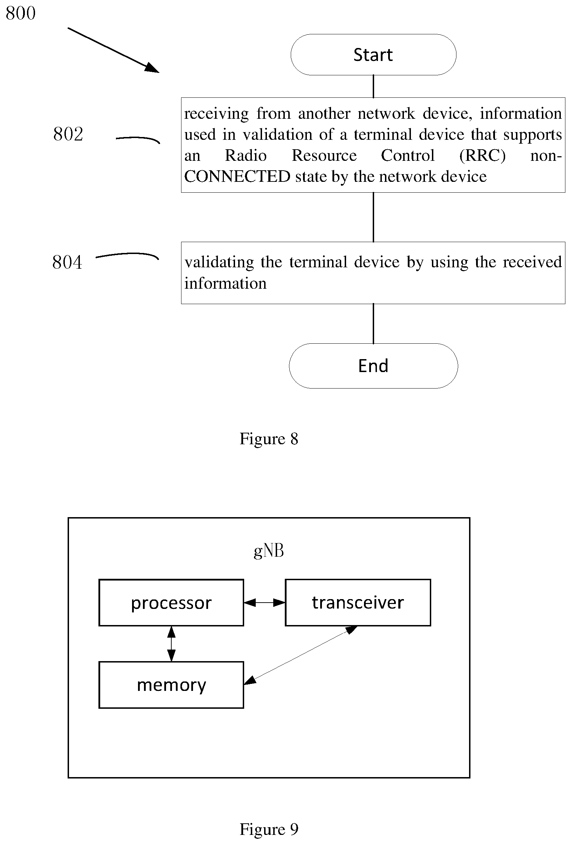

Figure 8 is a schematic flow chart diagram illustrating a further embodiment of a method 800 according to the present application. In some embodiments, the method 800 is performed by an apparatus, such as a base unit or a network device (e.g. gNB). In certain embodiments, the method 800 may be performed by a processor executing program code, for example, a microcontroller, a microprocessor, a CPU, a GPU, an auxiliary processing unit, a FPGA, or the like.

The method 800 may be performed by a network device, e.g. gNB#2 in Figure 2 or Figure 3 or gNB#3 in Figure 4. The method 800 comprises 802 receiving from another network device, information used in validation of a terminal device that supports an Radio Resource Control (RRC) non-CONNECTED state by the network device; and 804 validating the terminal device by using the received information.

In some embodiment, the information used in validation of the terminal device is a secured token or ResumeMAC-I or shortResumeMAC-I and/or related information used in validation of the terminal device and/or UE context related information of the terminal device.

In some embodiment, the information is received before transmitting a request for Retrieve UE Context procedure to the other network device.

Figure 9 is a schematic block diagram illustrating apparatuses according to one embodiment.

Referring to Figure 9, the gNB (i.e. base unit or network device) includes a processor, a memory, and a transceiver. The processors implement a function, a process, and/or a method which are proposed in Figure 5 or 6 or 7 or 8.

The network device performing the method in Figure 5 comprises a processor, and a transceiver coupled to the processor, wherein the processor is configured to: determine whether radio link problem occurs during downlink (DL) small data transmission (SDT) to a terminal device that supports an Radio Resource Control (RRC) non-CONNECTED state; and transmit, via the transceiver, to another network device that has the context of the terminal device, an indication of occurrence of the radio link problem if the occurrence of the radio link problem is determined, or an indication of occurrence or non-occurrence of the radio link problem if a request for the indication is received, via the transceiver, from the other network device. The processor may be configured to determine successful or unsuccessful transmission of each RLC SDU, and the occurrence of radio link problem is determined when at least one RLC SDU is transmitted unsuccessfully.

In one embodiment, the processor is further configured to receive, via the transceiver, an indication of the length of PDCP SN. The processor may be further configured to determine a PDCP SN for each of the PDCP PDU or PDCP SDU received from the other network device based on the length of PDCP SN. In particular, the indication is an SN indication to indicate successful or unsuccessful transmission of RLC SDU(s) and/or PDCP PDU(s) or PDCP SDU(s), where the SN indication includes one or more PDCP SNs each of which identifies a PDCP PDU or PDCP SDU or RLC SDU.

In another embodiment, the processor is further configured to set an index to each of the PDCP PDU received from the other network device in order, or receive, via the transceiver, from the other network device, an index associated with each of the PDCP PDU received from the other network device. In particular, the indication is an index indication to indicate successful or unsuccessful transmission of RLC SDU(s) and/or PDCP PDU(s) or PDCP SDU(s), where the index indication includes one or more indices each of which identifies a PDCP PDU or PDCP SDU or RLC SDU.

The network device performing the method in Figure 6 comprises a processor, and a transceiver coupled to the processor, wherein the processor is configured to: control downlink (DL) small data transmission (SDT) by another network device with a terminal device that supports an Radio Resource Control (RRC) non-CONNECTED state by determining context of the terminal device; and receive, via the transceiver, an indication of occurrence or non-occurrence of the radio link problem during the DL SDT from the other terminal device by transmitting, via the transceiver, to the other network device, a request for the indication, or an indication of occurrence of the radio link problem during the DL SDT from the other terminal device.

In one embodiment, the processor is further configured to transmit, via the transceiver, to the other network device, an indication of the length of PDCP SN. In particular, the indication is an SN indication to indicate successful or unsuccessful transmission of RLC SDU(s) and/or PDCP PDU(s) or PDCP SDU(s), where the SN indication includes one or more PDCP SNs each of which identifies a PDCP PDU or PDCP SDU or RLC SDU.

In another embodiment, the processor is further configured to set an index to each of the PDCP PDU transmitted to the other network device in order, or transmit, via the transceiver, to the other network device, an index associated with each of the PDCP PDU transmitted to the other network device. In particular, the indication is an index indication to indicate successful or unsuccessful transmission of RLC SDU(s) and/or PDCP PDU(s) or PDCP SDU(s), where the index indication includes one or more indices each of which identifies a PDCP PDU or PDCP SDU or RLC SDU.

The network device performing the method in Figure 7 comprises a processor, and a transceiver coupled to the processor, wherein the processor is configured to: determine another network device that is reselected by a terminal device that supports an Radio Resource Control (RRC) non-CONNECTED state; and transmit, via the transceiver, to the other network device, information used in validation of the terminal device by the other network device.

In some embodiment, the information used in validation of the terminal device is secured token or ResumeMAC-I or shortResumeMAC-I and/or related information used in validation of the terminal device and/or UE context related information of the terminal device.

In some embodiment, the determination of the other network device is made before receiving a request for Retrieve UE Context procedure from the other network device.

The network device performing the method in Figure 8 comprises a processor, and a transceiver coupled to the processor, wherein the processor is configured to: receive, via the transceiver, from another network device, information used in validation of a terminal device that supports an Radio Resource Control (RRC) non-CONNECTED state by the network device; and validate the terminal device by using the received information.

In some embodiment, the information used in validation of the terminal device is a secured token or ResumeMAC-I or shortResumeMAC-I and/or related information used in validation of the terminal device and/or UE context related information of the terminal device.

In some embodiment, the information is received before transmitting a request for Retrieve UE Context procedure to the other network device.

Layers of a radio interface protocol may be implemented by the processors. The memories are connected with the processors to store various pieces of information for driving the processors. The transceivers are connected with the processors to transmit and/or receive a radio signal. Needless to say, the transceiver may be implemented as a transmitter to transmit the radio signal and a receiver to receive the radio signal.

The memories may be positioned inside or outside the processors and connected with the processors by various well-known means.

In the embodiments described above, the components and the features of the embodiments are combined in a predetermined form. Each component or feature should be considered as an option unless otherwise expressly stated. Each component or feature may be implemented not to be associated with other components or features. Further, the embodiment may be configured by associating some components and/or features. The order of the operations described in the embodiments may be changed. Some components or features of any embodiment may be included in another embodiment or replaced with the component and the feature corresponding to another embodiment.

The embodiments may be implemented by hardware, firmware, software, or combinations thereof. In the case of implementation by hardware, according to hardware implementation, the exemplary embodiment described herein may be implemented by using one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and the like.

Embodiments may be practiced in other specific forms. The described embodiments are to be considered in all respects to be only illustrative and not restrictive. The scope of the invention is, therefore, indicated by the appended claims rather than by the foregoing description.

## Claims

1. A base station for wireless communication, comprising:
at least one memory; and
at least one processor coupled with at least one memory and configured to cause the base station to:
determine (502) whether a radio link problem occurs during small data transmission, SDT, to a terminal device that is in a Radio Resource Control, RRC, non-CONNECTED state; and
transmit (504) to another base station that has the context of the terminal device, an indication of occurrence of the radio link problem if the occurrence of the radio link problem is determined, or an indication of occurrence or non-occurrence of the radio link problem if a request for the indication is received from the other base station.

2. The base station of claim 1, wherein the processor is configured to cause the base station to determine successful or unsuccessful transmission of each RLC SDU, and the occurrence of the radio link problem is determined when at least one RLC SDU is transmitted unsuccessfully.

3. The base station of claim 2, wherein the processor is further configured to cause the base station to receive an indication of the length of PDCP SN.

4. The base station of claim 3, wherein the processor is further configured to cause the base station to determine a PDCP SN for each of the PDCP PDU or PDCP SDU received from the other base station based on the length of PDCP SN.

5. The base station of claim 4, wherein the indication is an SN indication to indicate successful or unsuccessful transmission of at least one RLC SDU and/or at least one PDCP PDU or at least one PDCP SDU, where the SN indication includes one or more PDCP SNs each of which identifies a PDCP PDU or PDCP SDU or RLC SDU.

6. The base station of claim 2, wherein the processor is further configured to cause the base station to set an index to each of the PDCP PDU received from the other base station in order, or receive from the other base station, an index associated with each of the PDCP PDU received from the other base station.

7. The base station of claim 6, wherein the indication is an index indication to indicate successful or unsuccessful transmission of at least one RLC SDU and/or at least one PDCP PDU or at least one PDCP SDU, where the index indication includes one or more indices each of which identifies a PDCP PDU or PDCP SDU or RLC SDU.

8. The base station of claim 1, wherein the processor is configured to cause the base station to transmit a message to indicate successful or unsuccessful transmission in response to either receiving a request from the another base station or to detecting the radio link problem, optionally wherein the message is a new IE included in an XnAP message.

9. A base station for wireless communication, comprising:
at least one memory; and
at least one processor coupled with at least one memory and configured to cause the base station to:
control (602) small data transmission, SDT, by another base station with a terminal device that is in a Radio Resource Control, RRC, non-CONNECTED state by determining context of the terminal device; and
receive (604) an indication, originated in the another base station, of occurrence or non-occurrence of a radio link problem during the SDT by transmitting to the other base station, a request for the indication, or an indication, originated in the another base station, of occurrence of the radio link problem during the SDT.

10. The base station of claim 7, wherein the processor is further configured to transmit to the other base station, an indication of the length of PDCP SN.

11. The base station of claim 8, wherein the indication is an SN indication to indicate successful or unsuccessful transmission of at least one RLC SDU and/or at least one PDCP PDU or at least one PDCP SDU, where the SN indication includes one or more PDCP SNs each of which identifies a PDCP PDU or PDCP SDU or RLC SDU.

12. The base station of claim 9, wherein the processor is further configured to cause the base station to set an index to each of the PDCP PDU transmitted to the other base station in order, or transmit to the other base station, an index associated with each of the PDCP PDU transmitted to the other base station.

13. The base station of claim 12, wherein the indication is an index indication to indicate successful or unsuccessful transmission of at least one RLC SDU and/or at least one PDCP PDU or at least one PDCP SDU, where the index indication includes one or more indices each of which identifies a PDCP PDU or PDCP SDU or RLC SDU.

14. A method (500) for wireless communication performable by a base station, comprising:
determining (502) whether a radio link problem occurs during small data transmission, SDT) to a terminal device that is in a Radio Resource Control, RRC, non-CONNECTED state; and
transmitting (504) to another base station that has the context of the terminal device, an indication of occurrence of the radio link problem if the occurrence of the radio link problem is determined, or an indication of occurrence or non-occurrence of the radio link problem if a request for the indication is received from the other base station.

15. A processor for a base station for wireless communication, comprising:
at least one controller coupled with at least one memory and configured to cause the processor to:
determine (502) whether a radio link problem occurs during small data transmission, SDT, to a terminal device that is in a Radio Resource Control, RRC, non-CONNECTED state; and
transmit (504) to another base station that has the context of the terminal device, an indication of occurrence of the radio link problem if the occurrence of the radio link problem is determined, or an indication of occurrence or non-occurrence of the radio link problem if a request for the indication is received from the other base station.

## Patentansprüche

1. Basisstation zur drahtlosen Kommunikation, umfassend:
mindestens einen Speicher; und
mindestens einen Prozessor, der mit mindestens einem Speicher gekoppelt und dazu konfiguriert ist, die Basisstation zu Folgendem zu veranlassen:
Bestimmen (502), ob während einer Small-Data-Übertragung (SDT) an ein Endgerät, das sich in einem nicht-VERBUNDENEN Zustand der Funkressourcensteuerung (RRC) befindet, ein Funkverbindungsfehler auftritt; und
Übertragen (504) einer Angabe über das Auftreten des Funkverbindungsfehlers an eine andere Basisstation, die über den Kontext des Endgeräts verfügt, falls das Auftreten des Funkverbindungsfehlers festgestellt wird, oder einer Angabe über das Auftreten bzw. Nichtauftreten des Funkverbindungsfehlers, falls eine Anforderung für die Angabe von der anderen Basisstation empfangen wird.

2. Basisstation nach Anspruch 1, wobei der Prozessor dazu konfiguriert ist, die Basisstation dazu zu veranlassen, die erfolgreiche bzw. erfolglose Übertragung jeder RLC-SDU festzustellen, und wobei das Auftreten des Funkverbindungsproblems festgestellt wird, wenn mindestens eine RLC-SDU erfolglos übertragen wird.

3. Basisstation nach Anspruch 2, wobei der Prozessor ferner dazu konfiguriert ist, die Basisstation zu veranlassen, eine Angabe zur Länge der PDCP-SN zu empfangen.

4. Basisstation nach Anspruch 3, wobei der Prozessor ferner dazu konfiguriert ist, die Basisstation zu veranlassen, für jede der von der anderen Basisstation empfangenen PDCP-PDU oder PDCP-SDU eine PDCP-SN auf Grundlage der Länge der PDCP-SN zu bestimmen.

5. Basisstation nach Anspruch 4, wobei die Angabe eine SN-Angabe ist, um die erfolgreiche bzw. erfolglose Übertragung mindestens einer RC-SDU und/oder mindestens einer PDCP-PDU oder mindestens einer PDCP-SDU anzugeben, wobei die SN-Angabe eine oder mehrere PDCP-SN beinhaltet, von denen jede eine PDCP-PDU oder PDCP-SDU oder RLC-SDU identifiziert.

6. Basisstation nach Anspruch 2, wobei der Prozessor ferner dazu konfiguriert ist, die Basisstation zu veranlassen, jeder der von der anderen Basisstation empfangenen PDCP-PDU der Reihe nach einen Index zuzuweisen oder von der anderen Basisstation einen Index zu empfangen, der jeder der von der anderen Basisstation empfangenen PDCP-PDU zugeordnet ist.

7. Basisstation nach Anspruch 6, wobei die Angabe eine Indexangabe ist, um die erfolgreiche bzw. erfolglose Übertragung mindestens einer RLC-SDU und/oder mindestens einer PDCP-PDU oder mindestens einer PDCP-SDU anzugeben, wobei die Indexangabe einen oder mehrere Indizes beinhaltet, von denen jeder eine PDCP-PDU, eine PDCP-SDU oder eine RLC-SDU identifiziert.

8. Basisstation nach Anspruch 1, wobei der Prozessor dazu konfiguriert ist, die Basisstation zu veranlassen, eine Nachricht zum Angeben einer erfolgreichen bzw. erfolglosen Übertragung zu übertragen, und zwar als Reaktion entweder auf das Empfangen einer Anfrage von der anderen Basisstation oder auf das Erkennen des Funkverbindungsproblems, wobei die Nachricht optional ein neues IE ist, das in einer XnAP-Nachricht enthalten ist.

9. Basisstation zur drahtlosen Kommunikation, umfassend:
mindestens einen Speicher; und
mindestens einen Prozessor, der mit mindestens einem Speicher gekoppelt und dazu konfiguriert ist, die Basisstation zu Folgendem zu veranlassen:
Steuern (602) einer Small-Data-Übertragung (SDT) durch eine andere Basisstation mit einem Endgerät, das sich in einem nicht-VERBUNDENEN Zustand der Funkressourcensteuerung (RRC) befindet, indem der Kontext des Endgeräts bestimmt wird; und
Empfangen (504) einer Angabe, die von der anderen Basisstation stammt, über das Auftreten bzw. Nichtauftreten eines Funkverbindungsfehlers während der SDT durch Übertragen einer Anforderung für die Angabe oder einer Angabe, die von der anderen Basisstation stammt, über das Auftreten des Funkverbindungsfehlers während der STD an die andere Basisstation.

10. Basisstation nach Anspruch 7, wobei der Prozessor ferner dazu konfiguriert ist, eine Angabe über die Länge des PDCP-SN an die andere Basisstation zu übertragen.

11. Basisstation nach Anspruch 8, wobei die Angabe eine SN-Angabe ist, um die erfolgreiche bzw. erfolglose Übertragung mindestens einer RC-SDU und/oder mindestens einer PDCP-PDU oder mindestens einer PDCP-SDU anzugeben, wobei die SN-Angabe eine oder mehrere PDCP-SN beinhaltet, von denen jede eine PDCP-PDU oder PDCP-SDU oder RLC-SDU identifiziert.

12. Basisstation nach Anspruch 9, wobei der Prozessor ferner dazu konfiguriert ist, die Basisstation zu veranlassen, jeder der von der anderen Basisstation empfangenen PDCP-PDU der Reihe nach einen Index zuzuweisen oder von der anderen Basisstation einen Index zu empfangen, der jeder der von der anderen Basisstation empfangenen PDCP-PDU zugeordnet ist.

13. Basisstation nach Anspruch 12, wobei die Angabe eine Indexangabe ist, um die erfolgreiche bzw. erfolglose Übertragung mindestens einer RLC-SDU und/oder mindestens einer PDCP-PDU oder mindestens einer PDCP-SDU anzugeben, wobei die Indexangabe einen oder mehrere Indizes beinhaltet, von denen jeder eine PDCP-PDU, eine PDCP-SDU oder eine RLC-SDU identifiziert.

14. Von einer Basisstation durchführbares Verfahren (500) zur drahtlosen Kommunikation, umfassend:
Bestimmen (502), ob während einer Small-Data-Übertragung (SDT) an ein Endgerät, das sich in einem nicht-VERBUNDENEN Zustand der Funkressourcensteuerung (RRC) befindet, ein Funkverbindungsfehler auftritt; und
Übertragen (504) einer Angabe über das Auftreten des Funkverbindungsfehlers an eine andere Basisstation, die über den Kontext des Endgeräts verfügt, falls das Auftreten des Funkverbindungsfehlers festgestellt wird, oder einer Angabe über das Auftreten bzw. Nichtauftreten des Funkverbindungsfehlers, falls eine Anforderung für die Angabe von der anderen Basisstation empfangen wird.

15. Prozessor für eine Basisstation zur drahtlosen Kommunikation, umfassend:
mindestens eine Steuereinheit, die mit mindestens einem Speicher gekoppelt und dazu konfiguriert ist, den Prozessor zu Folgendem zu veranlassen:
Bestimmen (502), ob während einer Small-Data-Übertragung (SDT) an ein Endgerät, das sich in einem nicht-VERBUNDENEN Zustand der Funkressourcensteuerung (RRC) befindet, ein Funkverbindungsfehler auftritt; und
Übertragen (504) einer Angabe über das Auftreten des Funkverbindungsfehlers an eine andere Basisstation, die über den Kontext des Endgeräts verfügt, falls das Auftreten des Funkverbindungsfehlers festgestellt wird, oder einer Angabe über das Auftreten bzw. Nichtauftreten des Funkverbindungsfehlers, falls eine Anforderung für die Angabe von der anderen Basisstation empfangen wird.

## Revendications

1. Station de base pour communication sans fil, comprenant :
au moins une mémoire ; et
au moins un processeur couplé à l'au moins une mémoire et configuré pour amener la station de base à :
déterminer (502) si un problème de liaison radio se produit lors d'une transmission de petites données, SDT, vers un terminal dont l'état de contrôle des ressources radio (RRC) est « non CONNECTÉ » ; et
transmettre (504) à une autre station de base disposant du contexte du terminal, une indication signalant l'occurrence du problème de liaison radio si l'occurrence du problème de liaison radio est déterminée, ou une indication signalant l'occurrence ou la non-occurrence du problème de liaison radio si une requête concernant l'indication est reçue de l'autre station de base.

2. Station de base selon la revendication 1, dans laquelle le processeur est configuré pour amener la station de base à déterminer si la transmission de chaque SDU RLC a réussi ou échoué, l'occurrence du problème de liaison radio étant déterminée lorsque la transmission d'au moins une SDU RLC a échoué.

3. Station de base selon la revendication 2, dans laquelle le processeur est en outre configuré pour amener la station de base à recevoir une indication de la longueur du SN PDCP.

4. Station de base selon la revendication 3, dans laquelle le processeur est en outre configuré pour amener la station de base à déterminer un SN PDCP pour chacune des PDU PDCP ou SDU PDCP reçues de l'autre station de base sur la base de la longueur du SN PDCP.

5. Station de base selon la revendication 4, dans laquelle l'indication est une indication de SN destinée à signaler la réussite ou l'échec de la transmission d'au moins une SDU RLC et/ou d'au moins une PDU PDCP ou d'au moins une SDU PDCP, l'indication de SN comprenant un ou plusieurs SN PDCP, chacun identifiant une PDU PDCP, une SDU PDCP ou une SDU RLC.

6. Station de base selon la revendication 2, dans laquelle le processeur est en outre configuré pour amener la station de base à attribuer un indice à chacune des PDU PDCP reçues de l'autre station de base dans l'ordre, ou à recevoir de l'autre station de base un indice associé à chacune des PDU PDCP reçues de l'autre station de base.

7. Station de base selon la revendication 6, dans laquelle l'indication est une indication d'indice destinée à signaler la réussite ou l'échec de la transmission d'au moins une SDU RLC et/ou d'au moins une PDU PDCP ou d'au moins une SDU PDCP, l'indication d'indice comprenant un ou plusieurs indices, chacun identifiant une PDU PDCP, une SDU PDCP ou une SDU RLC.

8. Station de base selon la revendication 1, dans laquelle le processeur est configuré pour amener la station de base à transmettre un message indiquant la réussite ou l'échec de la transmission en réponse soit à la réception d'une requête provenant de l'autre station de base, soit à la détection du problème de liaison radio, le message étant éventuellement un nouvel IE inclus dans un message XnAP.

9. Station de base pour communication sans fil, comprenant :
au moins une mémoire ; et
au moins un processeur couplé à l'au moins une mémoire et configuré pour amener la station de base à :
contrôler (602) une transmission de petites données, SDT, par une autre station de base avec un terminal dont l'état de contrôle des ressources radio (RRC) est « non CONNECTÉ », en déterminant le contexte du terminal ; et
recevoir (604) une indication, émanant de l'autre station de base,
de l'occurrence ou de la non-occurrence d'un problème de liaison radio pendant la SDT, en transmettant à l'autre station de base une requête concernant cette indication, ou une indication, provenant de l'autre station de base, signalant l'occurrence du problème de liaison radio pendant la SDT.

10. Station de base selon la revendication 7, dans laquelle le processeur est en outre configuré pour transmettre à l'autre station de base une indication de la longueur du SN PDCP.

11. Station de base selon la revendication 8, dans laquelle l'indication est une indication de SN destinée à signaler la réussite ou l'échec de la transmission d'au moins une SDU RLC et/ou d'au moins une PDU PDCP ou d'au moins une SDU PDCP, l'indication de SN comprenant un ou plusieurs SN PDCP, chacun identifiant une PDU PDCP, une SDU PDCP ou une SDU RLC.

12. Station de base selon la revendication 9, dans laquelle le processeur est en outre configuré pour amener la station de base à attribuer un indice à chacune des PDU PDCP transmises à l'autre station de base dans l'ordre, ou à transmettre à l'autre station de base un indice associé à chacune des PDU PDCP transmises à l'autre station de base.

13. Station de base selon la revendication 12, dans laquelle l'indication est une indication d'indice destinée à signaler la réussite ou l'échec de la transmission d'au moins une SDU RLC et/ou d'au moins une PDU PDCP ou d'au moins une SDU PDCP, l'indication d'indice comprenant un ou plusieurs indices, chacun identifiant une PDU PDCP, une SDU PDCP ou une SDU RLC.

14. Procédé (500) de communication sans fil pouvant être mis en œuvre par une station de base, comprenant :
la détermination (502) de la question de savoir si un problème de liaison radio se produit lors de la transmission de petites données (SDT) vers un terminal dont l'état de contrôle des ressources radio (RRC) est « non CONNECTÉ » ; et
la transmission (504) à une autre station de base disposant du contexte du terminal, d'une indication signalant l'occurrence du problème de liaison radio si l'occurrence de ce problème est déterminée, ou d'une indication signalant l'occurrence ou la non-occurrence du problème de liaison radio si une requête concernant l'indication est reçue de la part de l'autre station de base.

15. Processeur pour une station de base de communication sans fil, comprenant :
au moins un contrôleur couplé à au moins une mémoire et configuré pour amener le processeur à :
déterminer (502) si un problème de liaison radio se produit lors d'une transmission de petites données, SDT, vers un terminal dont l'état de contrôle des ressources radio (RRC) est « non CONNECTÉ » ; et
transmettre (504) à une autre station de base disposant du contexte du terminal, une indication signalant l'occurrence du problème de liaison radio si l'occurrence du problème de liaison radio est déterminée, ou une indication signalant l'occurrence ou la non-occurrence du problème de liaison radio si une requête concernant l'indication est reçue de la part de l'autre station de base.
